# EUROPÄISCHE PATENTSCHRIFT

(11) **EP 3 452 367 B1**
(45) Veröffentlichungstag und Bekanntmachung des Hinweises auf die Patenterteilung: **26.02.2020**
(21) Anmeldenummer: 17721371.7
(22) Anmeldetag: 03.05.2017
(51) Int. Cl.: B64D 11/04, B64D 11/00, A47B 88/417, A47B 57/08

(54) **STAUFACHVORRICHTUNG UND STAUFACHSYSTEM FÜR EINE BORDKÜCHE EINES LUFTFAHRZEUGS**
STORAGE COMPARTMENT DEVICE AND STORAGE SYSTEM FOR A GALLEY FOR AN AIRCRAFT
DISPOSITIF DE COMPARTIMENT DE RANGEMENT ET SYSTÈME DE COMPARTIMENT DE RANGEMENT POUR UNE CUISINE DE BORD POUR UN AÉRONEF

(30) Priorität: 04.05.2016 US 201662331743 P
(43) Veröffentlichungstag der Anmeldung: 13.03.2019
(73) Patentinhaber: Safran Cabin Germany GmbH, 35745 Herborn (DE)
(72) Erfinder: BITTER, Mario, 57462 Olpe (DE); WALLBOTT, Tim, 35633 Lahnau (DE); JUNGE, Marcus, 21614 Buxtehude (DE)
(74) Vertreter: Grosse, Wolf-Dietrich Rüdiger
(86) Internationale Anmeldenummer: PCT/EP2017/060560
(87) Internationale Veröffentlichungsnummer: WO 2017/191202

(56) Entgegenhaltungen:
- EP-A1- 2 939 925
- US-A1- 2004 188 564
- US-A1- 2009 314 889

## Beschreibung

Die vorliegende Erfindung betrifft eine Staufachvorrichtung für eine Bordküche eines Luftfahrzeugs nach Gattung des unabhängigen Anspruchs 1. Gegenstand der Erfindung ist auch ein Staufachsystem für eine Bordküche eines Luftfahrzeugs gemäß Anspruch 15.

### Stand der Technik

In heutigen Luftfahrzeugen, insbesondere in Passagierflugzeugen, werden Mahlzeiten mitgeführt, die in der Bordküche, auch Galley genannt, des Luftfahrzeugs in einem Dampfofen oder Konvektionsofen erwärmt und anschließend vom Bordkabinenpersonal den Passagieren serviert werden. Während der Flugvorbereitung werden versiegelte Mahlzeiten in Rollcontainern, auch Trolleys genannt, in die Bordküche gebracht. Zur sicheren Lagerung der Rollcontainer während des Starts, der Flugphase und der Landung sind in der Bordküche Staufachvorrichtungen mit Staufächern, auch Compartments genannt, bereitgestellt. Ein jeweiliger Rollcontainer mit den versiegelten Mahlzeiten wird auf seinen Rollen in ein jeweiliges Staufach einer Staufachvorrichtung hineingeschoben und anschließend fixiert. Ein derartiger Ofen einer Galley ist zur Aufnahme von einem oder mehreren Ofeneinsätzen bzw. Ofeneinschüben, auch Oven Racks oder Oven Inserts genannt, ausgebildet, die in den Ofen hintereinander und übereinander hineinschiebbar und lagerbar sind und jeweils ein Mehrzahl von Ofentabletts, auch Oven Trays genannt, mit versiegelten Mahlzeiten aufnehmen können. Zur Mahlzeitenerwärmung entnimmt das Bordkabinenpersonal die versiegelten Mahlzeiten einzeln aus den Rollcontainern, räumt sie einzeln in die Ofeneinsätze ein und schiebt die mit den Mahlzeiten bestückten Ofeneinsätze in den Ofen. Anschließend werden die in den Ofeneinsätzen gelagerten Mahlzeiten zur Erwärmung in dem Ofen mit Dampf und/oder Konvektionswärme beaufschlagt. Während der Nichtnutzung eines Ofens werden die Ofeneinsätze in der Regel in dem Ofen und/oder in speziellen Ofeneinsatz-Staufachvorrichtungen gelagert, die wie der Ofen speziell zum Halten von hintereinander und übereinander in ein Staufach der Ofeneinsatz-Staufachvorrichtung eingebrachten Öfeneinsätzen ausgestaltet sind.

Die oben geschilderten Abläufe der Mahlzeitenerwärmung in einer Bordküche eines Luftfahrzeugs sind zeitaufwändig. Zudem beanspruchen die aus Sicherheitsgründen erforderlichen und in der Bordküche bereitzustellenden Staufächer für die Rollcontainer und die Ofeneinsätze viel Stauraum in dem Luftfahrzeug. Außerdem bleiben bei Kurzstreckenflügen und Nachtflügen ohne Zubereitung von Mahlzeiten die Ofeneinsatz-Staufachvorrichtungen und somit auch deren Stauraum häufig ungenutzt. Grundsätzlich muss die Bordküche aber für lange Tagflüge mit hochfrequenter Mahlzeitzubereitung ausgelegt sein und muss somit dauerhaft die maximal erforderliche Anzahl der Ofeneinsatz-Staufachvorrichtungen bereitstellen. Daher wird der knappe Raum in dem Luftfahrzeug nicht effizient genutzt.

Dokument US2004/0188564 offenbart eine Staufachvorrichtung für Behälter und ein vertikales Liftsystem, das mit einem Hebehacken die Behälter eingreift. Dokumente US2009/0314889 und EP2939925 zeigen standardisierte Staufächer für verschiedene Rollcontainers, Schubladen oder Trolleys.

### Offenbarung der Erfindung

Der vorliegenden Erfindung liegt daher die Aufgabe zugrunde, eine verbesserte Staufachvorrichtung bzw. ein verbessertes Staufachsystem für eine Bordküche eines Luftfahrzeugs bereitzustellen, die schnellere Servicezeiten bei der Mahlzeiterwärmung sowie eine bessere Ausnutzung des durch die Staufachvorrichtungen der Bordküche bereitgestellten Stauraums ermöglichen. Zudem wäre es wünschenswert, wenn die Staufachvorrichtungen der Bordküche in Abhängigkeit von einem aktuellen Nutzungsszenario flexibel umkonfiguriert werden könnten.

Die Aufgabe der Erfindung wird durch eine Staufachvorrichtung für eine Bordküche eines Luftfahrzeugs mit den Merkmalen des Anspruchs 1 gelöst. Der Erfindung liegt die Erkenntnis zugrunde, dass der Arbeitsaufwand für das Bordpersonal reduziert werden kann, indem das Umräumen der zu erwärmenden Mahlzeiten von den Rollcontainern in die Ofeneinsätze entfällt. Durch die Reduzierung des Arbeitsaufwandes kann ja nach Servicekonzept die Servicezeit reduziert werden. Dazu müssten die Mahlzeiten sich bereits mit dem Abschluss der Flugvorbereitung in den Ofeneinsätzen befinden, die in entsprechenden Staufachvorrichtungen in der Bordküche verstaut sind. Wenn während des Flugs keine Mahlzeitenerwärmung erfolgen soll, brauchen diese Staufachvorrichtungen keine Ofeneinsätze mit Mahlzeiten aufzunehmen, sondern können zur Lagerung und Sicherung von Rollcontainern verwendet werden. Somit besteht die Lösung der Erfindung in einer Staufachvorrichtung mit einem modular umgestaltbaren und mit geringem Aufwand umrüstbaren Staufach. Erfindungsgemäß ist dieselbe Staufachvorrichtung einerseits zur Aufnahme mindestens eines Rollcontainers und andererseits, nach einer Umrüstung durch einen Benutzer, zum Aufnehmen und Halten mindestens eines Behälters, insbesondere eines Ofeneinsatzes, in dem Staufach ausgebildet.

Die vorgestellte Staufachvorrichtung weist ein als einen Hohlraum ausgebildetes Staufach auf, in das in einem ersten Umrüstzustand mindestens ein Rollcontainer hineingerollt werden kann, um in dem Staufach aufgenommen zu werden. In einem zweiten Umrüstzustand, der von dem ersten Umrüstzustand unterschiedlich ist, ist das Staufach zum Aufnehmen und Halten mindestens eines Behälters ausgebildet. Der Behälter ist insbesondere ein Ofeneinsatz. Zur Bereitstellung der unterschiedlichen Umrüstzustände sind in dem Staufach klappbare Führungs- und Haltevorrichtungen bereitgestellt, die alternativ in einen eingeklappten und einen ausgeklappten Zustand versetzbar sind. In dem ausgeklappten Zustand sind die Führungs- und Haltevorrichtungen ausgebildet zum Halten des mindestens einen Behälters in dem Staufach. Ferner ist in dem ausgeklappten Zustand der Führungs- und Haltevorrichtungen die Staufachvorrichtung nicht zur Aufnahme eines Rollcontainers ausgebildet. Die Führungs- und Haltevorrichtungen lassen in dem ausgeklappten Zustand kein Einbringen des Rollcontainers in das Staufach zu. Nur in dem eingeklappten Zustand ist der mindestens eine Rollcontainer, insbesondere genau ein Fullsize-Trolley oder höchstens zwei Halfsize-Trolleys, in dem Staufach aufnehmbar.

Die umklappbaren Führungs- und Haltevorrichtungen ermöglichen, dass das Staufach der erfindungsgemäßen Staufachvorrichtung durch ein einfaches Einklappen oder Ausklappen der Führungs- und Haltevorrichtungen durch einen Benutzer der Bordküche an den aktuellen Verwendungszweck angepasst werden kann. Somit kann der durch die Staufachvorrichtung in der Bordküche beanspruchte Raum effizient genutzt werden. Zudem ist die vorgestellte Staufachvorrichtung sehr einfach und flexibel umkonfigurierbar.

Die vorgestellte Staufachvorrichtung ist in ihren physikalischen Abmessungen an die für Bordküchen in Passagierflugzeugen etablierten Rollcontainer und Behälter angepasst. Die Rollcontainer und Behälter sind ohne Beschränkung darauf beispielsweise konform zu den für Bordküchenkomponenten von Passagierflugzeugen heutzutage etablierten Standardnormen, wie ATLAS, KSSU, ACE oder A-RINC 810.

Unter einem Rollcontainer, auch Trolley genannt, wird ein mit Rollen bzw. Rädern ausgestatteter Container verstanden, der auf seinen Rädern durch Bordkabinenpersonal in dem Luftfahrzeug bewegbar ist. In dem vorgestellten Staufach wird der mindestens eine Rollcontainer aufgenommen, indem er mit seinen Rädern auf dem Boden des Staufachs steht und durch seine Bremsvorrichtung am eigenständigen Rollen gehindert wird. Der mindestens eine Rollcontainer ist im Sinne der oben erwähnten Standardnormen beispielsweise entweder ein Fullsize-Trolley oder zwei Halfsize-Trolleys. Hinsichtlich der Anzahl aufgenommener Halfsize-Trolleys ist es bei Start und Landung erforderlich, dass diese ein jeweiliges Staufach immer komplett ausfüllen.

Unter einem Behälter wird eines oder mehrere der folgenden Elemente verstanden: Ofeneinsatz (Synonyme: Ofeneinschub, Oven Rack, Oven Insert), Standard Unit, Schublade (Synonym: Drawer, Container). Die in dieser Auflistung durch Kommata getrennten Elemente verkörpern im Gegensatz zu den angeführten jeweiligen Synonymen unterschiedliche Typen von Behältern. Der durch die Führungs- und Haltevorrichtungen haltbare Behälter ist bevorzugt aber ohne Beschränkung darauf gemäß mindestens einer der oben erwähnten Standardnormen oder zukünftiger Standardnormen dimensioniert.

Im Gegensatz zu dem mindestens einen Rollcontainer, der in dem vorgestellten Staufach auf seinen Rädern stehend aufnehmbar ist, wird der mindestens eine Behälter in dem Staufach durch die an vorzugsweise gegenüberliegenden Innenseitenwänden des Staufachs bereitgestellten Führungs- und Haltevorrichtungen im ausgeklappten Zustand gehalten. Beim Einbringen des mindestens einen Behälters in das Staufach wird dieser also durch die vorzugsweise paarweise pro Behälterebene bereitgestellten Führungs- und Haltevorrichtungen gehalten bzw. gestützt. In dem eingeklappten Zustand sind die Führungs- und Haltevorrichtungen nicht zum Halten des mindestens einen Behälters ausgebildet. Die Führungs- und Haltevorrichtungen sind bevorzugt schienenartig ausgebildet. Ein an gegenüberliegenden Innenseitenwänden des Staufachs angeordnetes Paar von Führungs- und Haltevorrichtungen bildet eine Einschubebene für einen Behälter. Das Staufach stellt bevorzugt eine Mehrzahl derartiger Einschubebenen bereit. Zudem ist das Staufach bevorzugt zum Aufnehmen und Halten von zwei hintereinander in einer selben Einschubebene in das Staufach eingebrachten Behältern vorzugsweise desselben Typs ausgebildet.

In dem ausgeklappten Zustand stehen die Führungs- und Haltevorrichtungen weiter von den Innenseitenwänden des Staufachs hervor als in dem eingeklappten Zustand. In dem eingeklappten Zustand liegen ausklappbare Komponenten der Führungs- und Haltevorrichtungen möglichst nah an ihrer zugeordneten Innenseitenwand an. Die Führungs- und Haltevorrichtungen erstrecken sich bevorzugt entlang der vorgesehen Einbringrichtung, insbesondere in horizontaler Richtung bzw. parallel zum Fußboden der Bordküche. Das Umklappen der Führungs- und Haltevorrichtungen von dem eingeklappten Zustand in den ausgeklappten Zustand erfolgt bevorzugt durch Abwärtschwenken bzw. Runterklappen - also in einer Richtung zum Boden der Bordküche - von Komponenten der Führungs- und Haltevorrichtungen, die in dem eingeklappten Zustand nah an ihrer zugeordneten Innenwand anliegen. Das Umklappen der Führungs- und Haltevorrichtungen von dem ausgeklappten Zustand in den eingeklappten Zustand erfolgt bevorzugt durch Aufwärtsschwenken bzw. Hochklappen von Komponenten der Führungs- und Haltevorrichtungen, die in ihrem ausgeklappten Zustand weiter von ihrer zugeordneten Innenwand hervorstehen als in ihrem eingeklappten Zustand.

In einer Weiterbildung der vorgestellten Staufachvorrichtung ist vorgesehen, dass die Führungs- und Haltevorrichtungen in dem eingeklappten Zustand, bevorzugt nur in diesem Zustand, jeweils eine Gleitleiste zum Führen des mindestens einen Rollcontainers in dem Staufach bereitstellen. Die Gleitleisten ermöglichen ein einfacheres Einbringen des mindestens einen Rollcontainers in das Staufach und dienen zugleich zur an die Breite des Rollcontainers passenden Begrenzung der Breite des Hohlraums des Staufachs.

In einer Weiterbildung der vorgestellten Staufachvorrichtung ist vorgesehen, dass die Führungs- und Haltevorrichtungen jeweils ein Trageelement und bevorzugt ein dem Trageelement zugeordnetes Abstützungselement aufweisen. In dem ausgeklappten Zustand, bevorzugt nur in diesem Zustand, der jeweiligen Führungs- und Haltevorrichtung ist das jeweilige Trageelement zum Halten eines Behälters ausgebildet. Ferner ist in dem ausgeklappten Zustand das Trageelement auch als Führungsschiene zum Führen des Behälters während des Einbringens des Behälters in das Staufach ausgebildet. Das Abstützungselement ist zum Abstützen des Trageelements in dem ausgeklappten Zustand an einer Innenseitenwand des Staufachs ausgebildet. Das Trageelement kann durch eine sich in der Einbringrichtung des Behälters länglich erstreckende Platte gebildet sein, die zudem ein Flügel bzw. Blatt eines Scharniers ist. Das Abstützungselement kann durch einen Abschnitt einer insbesondere rechtwinklig abwinkelten Platte gebildet sein, die entlang des Trageelements verläuft und an dieser befestigt oder mit dieser integriert ist. Die Gleitleiste der im vorherigen Absatz erwähnten Weiterbildung kann an der abgewinkelten Platte und/oder an einer nicht zum Halten des Behälters vorgesehenen Oberfläche des Trageelements montiert sein. Die Gleitleiste kann zudem als das Abstützungselement so ausgebildet sein, dass die Gleitleiste in dem ausgeklappten Zustand der Führungs- und Haltevorrichtung durch das Trageelement gegen einen Abschnitt der Innenseitenwand des Staufachs gedrückt wird und somit das Trageelement mittels der als Gegenlager wirkenden Innenseitenwand stützt. Durch das Abstützungselement werden die von dem Trageelement aufnehmbaren Lasten erhöht.

Ferner ist in einer Weiterbildung der vorgestellten Staufachvorrichtung vorgesehen, dass die Führungs- und Haltevorrichtungen jeweils ein Scharnier mit einem an einer Innenseitenwand des Staufachs fixierten ersten Flügel (Synonym: Blatt) und einem relativ zu dem ersten Flügel um eine Scharnierachse drehbaren zweiten Flügel aufweisen. Der zweite Flügel ist in dem ausgeklappten Zustand der jeweiligen Führungs- und Haltevorrichtung zum Halten des mindestens einen Behälters ausgebildet. In dem eingeklappten Zustand ist der zweite Flügel als die oben erwähnte Gleitleiste zum Führen des mindestens einen Rollcontainers ausgebildet. Die Scharnierachse erstreckt sich bevorzugt entlang der vorgesehenen Einbringrichtung für den Behälter und somit in zumindest näherungsweise horizontaler Richtung. Diese Weiterbildung kann mit einfachen Mitteln realisiert werden. Der erste Flügel einer derartigen Führungs- und Haltevorrichtung kann zudem sehr einfach an einer Innenseitenwand einer konventionellen Staufachvorrichtung montiert werden. Daher können bestehende Staufachvorrichtungen - nach einer vorherigen erfolgreichen Prüfung der Umrüstbarkeit - effizient im Sinne der Verwendung umgerüstet und somit mit erhöhter Flexibilität und Umrüstbarkeit weiterverwendet werden.

Ferner ist in einer Weiterbildung der vorgestellten Staufachvorrichtung vorgesehen, dass mindestens eine der klappbaren Führungs- und Haltevorrichtungen mit einem integrierten Anschlag für den in dem Staufach aufgenommenen mindestens einen Behälter versehen ist. Bevorzugt ist mindestens eine, besonders bevorzugt sind beide von paarweise pro Einschubebene in dem Staufach bereitgestellte Führungs- und Haltevorrichtungen mit einem derartigen integrierten Anschlag versehen. Der Anschlag ist ausgebildet und angeordnet, um die Einschubtiefe des (möglicherweise hinteren) Behältnisses in dem Staufach derart zu begrenzen, dass die Vorderseite des (möglicherweise anderen vorderen) Behältnisses auf eine Sollposition bringbar ist. Bevorzugt ist der Anschlag so in die Führungs- und Haltevorrichtung integriert, dass er nur im ausgeklappten Zustand der Führungs- und Haltevorrichtung als Anschlag wirkt und somit aktiviert ist, und in dem eingeklappten Zustand der Führungs- und Haltevorrichtung nicht in den Hohlraum des Staufachs hervorsteht und somit deaktiviert ist. Zudem ist der Anschlag bevorzugt klappbar ausgestaltet, so dass er von einem aktivierten Zustand in den deaktivierten Zustand umklappbar ist. Besonders bevorzugt ist der Anschlag so in die bzw. mit der Führungs- und Haltevorrichtung integriert, dass der Anschlag mit dem Umklappen der Führungs- und Haltevorrichtung in den ausgeklappten Zustand in seinen aktivierten Zustand versetzt wird und zudem aus seinem aktivierten Zustand mittels Umklappen des Anschlags relativ zur in dem ausgeklappten Zustand verbleibenden Führungs- und Haltevorrichtung deaktivierbar ist. Unter dem Umklappen des Anschlags wird sowohl eine Schwenkbewegung des Anschlags als auch ein Herausziehen oder Hineindrücken eines Anschlags relativ zu einer Innenseitenwand des Staufachs verstanden. Die letztgenannte bevorzugte Fortbildung ermöglicht eine einfache Erweiterung der Einbringtiefe, wenn üblicherweise Behälter mit geringerer Tiefe, wie beispielsweise zwei hintereinander eingebrachte Ofeneinsätze, und nur selten (in diesem Fall nach einem vorherigen Umklappen bzw.

Deaktivieren des integrierten Anschlags) Behälter mit größerer Tiefe, wie beispielsweise zwei hintereinander eingebrachte Standard Units, auf demselben Paar von Führungs- und Haltevorrichtungen in das Staufach eingebracht werden. Somit kann das Staufach einfach für die alternative Verwendung von Ofeneinsätzen oder Standard Units durch Aktivieren bzw. Deaktivieren des integrierten Anschlags umgerüstet werden. Entsprechendes gilt für Schubladen, die bevorzugt paarweise pro Einschubebene in das Staufach eingebracht werden, wobei für die zuerst eingebrachte, hintere Schublade an passender Tiefenposition des Staufachs ein aktivierbarer bzw. deaktivierbarer Anschlag bereitgestellt ist.

Außerdem ist in einer Weiterbildung der vorgestellten Staufachvorrichtung vorgesehen, dass in dem Staufach für mindestens eine Einschubebene der klappbaren Führungs- und Haltevorrichtungen zwei oder mehr bevorzugt klappbare Anschläge mit zueinander unterschiedlichen behälterspezifischen Einbringtiefen angeordnet sind. Unter dem Umklappen des Anschlags wird ein beliebig ausgebildeter Wechsel von einem aktivierten zu einem deaktivierten Zustand und in umgekehrter Richtung verstanden. Wie bei der zuletzt genannten Fortbildung kann das Staufach somit einfach für die alternative Verwendung von Ofeneinsätzen oder Standard Units oder Schubladen durch Aktivieren bzw. Deaktivieren der unterschiedlichen Anschläge pro Einschubebene umgerüstet werden.

Ferner ist in einer Weiterbildung der vorgestellten Staufachvorrichtung vorgesehen, dass die Staufachvorrichtung zum Aufnehmen und Halten hintereinander angeordneter Behälter, insbesondere von genau zwei Behältern, bevorzugt desselben Typs, pro einer durch paarweise angeordnete Führungs- und Haltevorrichtungen gebildeten Einschubebene, ausgebildet ist. Ferner umfasst diese Weiterbildung bevorzugt eine Herausziehvorrichtung zum Herausziehen eines in dem Staufach aufgenommenen hinteren Behälters. Dadurch wird allgemein eine bessere Handhabung und im Besonderen eine schnelle und bequeme Leerung der Staufachvorrichtung ermöglicht. Aufgrund der schnellen Leerung kann die Staufachvorrichtung durch ein sich unmittelbar anschließendes Umklappen der Führungs- und Haltevorrichtungen zudem besonders schnell umgerüstet werden.

In einer Weiterbildung der vorgestellten Staufachvorrichtung ist vorgesehen, dass das Staufach für einen Benutzer von der Rollcontainer-Aufnahme zu der Behälter-Aufnahme und in umgekehrter Umrüstrichtung werkzeugfrei umrüstbar ist. Die Staufachvorrichtung ist insbesondere ohne Hinzufügung oder Entfernung von Komponenten zu bzw. von der Staufachvorrichtung von der Rollcontainer-Aufnahme zu der Behälter-Aufnahme und umgekehrt werkzeugfrei umrüstbar. Somit kann die vorgestellte Staufachvorrichtung schnell und flexibel umgerüstet werden.

Ferner ist in einer Weiterbildung der vorgestellten Staufachvorrichtung vorgesehen, dass die Staufachvorrichtung eine Einrichtung aufweist zum automatischen Versetzen der Führungs- und Haltevorrichtungen in den eingeklappten Zustand nach einer Entnahme eines von ihnen gehaltenen Behälters aus dem Staufach, wenn diese Führungs- und Haltevorrichtungen dann aktuell keinen anderen Behälter mehr hält und halten soll. Bevorzugt ist diese Einrichtung ausgebildet zum Versetzen aller der Führungs- und Haltevorrichtungen in den eingeklappten Zustand, falls in dem Staufach kein Behälter mehr aufgenommen und gehalten wird. Besonders bevorzugt erfolgt dieses Versetzen automatisiert in Reaktion auf eine Entnahme des letzten in dem Staufach aufgenommenen Behälters aus dem Staufach. Dadurch wird die Benutzerbequemlichkeit gesteigert, da ein Benutzer unmittelbar nach der Entnahme des letzten Behälters dank der automatisierten Umrüstung einen Rollcontainer in das Staufach einbringen kann. Ferner stellt diese Einrichtung einen Schutzmechanismus für die Staufachvorrichtung dar, deren ausgeklappte Führungs- und Haltevorrichtungen beim Einbringen eines Rollcontainers in das leere Staufach beschädigt würden.

Außerdem ist in einer Weiterbildung der vorgestellten Staufachvorrichtung vorgesehen, dass die Staufachvorrichtung eine Einrichtung zum automatischen Versetzen der Führungs- und Haltevorrichtungen in den ausgeklappten Zustand aufweist. Dadurch wird eine schnelle Umrüstung eines leeren Staufachs zum Aufnehmen und Halten von Behältern ermöglicht.

In einer Weiterbildung der vorgestellten Staufachvorrichtung ist vorgesehen, dass die Führungs- und Haltevorrichtungen im normalen Betrieb rein mechanisch, also ohne Unterstützung oder Kontrolle durch eine elektrische oder elektronische Einrichtung, umklappbar sind. Dadurch werden lange Wartungsintervalle und eine geringe Fehleranfälligkeit der vorgestellten Staufachvorrichtung gewährleistet.

In einer Weiterbildung der vorgestellten Staufachvorrichtung ist vorgesehen, dass das Staufach zur Aufnahme von einem Fullsize-Trolley oder Halfsize-Trolleys für eine Bordküche eines Luftfahrzeugs ausgebildet ist, wenn alle Führungs- und Haltevorrichtungen in dem eingeklappten Zustand sind. Das Staufach ist mindestens zur Aufnahme von genau einem Fullsize-Trolley ausgebildet. Im Fall einer Bordküche mit einer über die Einbringtiefe eines Fullsize-Trolleys hinausgehenden Gesamttiefe ist die vorgestellte Staufachvorrichtung mit einem Staufach versehen, in das so viele Fullsize-Trolleys und/oder Halfsize-Trolleys hintereinander eingebracht werden können, wie es die Gesamttiefe der Bordküche zulässt.

In einer Weiterbildung der vorgestellten Staufachvorrichtung ist vorgesehen, dass der mindestens eine Behälter für eine Bordküche eines Luftfahrzeugs vorgesehen ist und bevorzugt vom Typ eines Ofeneinsatzes, einer Standard Unit oder einer Schublade ist. Bevorzugt ist das Staufach zur Aufnahme von zwei Behältern desselben Typs pro Einschubebene des Staufachs ausgestaltet, wobei in dem Staufach eine Mehrzahl von Führungs- und Haltevorrichtungen zum Bereitstellen einer Mehrzahl von Einschubebenen angeordnet ist.

In einer Weiterbildung der vorgestellten Staufachvorrichtung ist vorgesehen, dass die Führungs- und Haltevorrichtungen mehrere Einschubebenen für Behälter in dem Staufach ausbilden und zum Aufnehmen und Halten einer Mehrzahl von Behältern eines ersten Typs, insbesondere von Ofeneinsätzen, und einer Mehrzahl von Behältern eines zum ersten Typ unterschiedlichen, zweiten Typs, insbesondere von Schubläden, angeordnet sind. Dadurch, dass unterschiedliche Behältertypen in dem Staufach aufgenommen werden können, werden ein hoher Komfort für den Benutzer und hohe Flexibilität erreicht. Eine Staufachvorrichtung mit Führungs- und Haltevorrichtungen zur Realisierung von drei Einschubebenen zur Aufnahme von insgesamt sechs Ofeneinsätzen und von einer Einschubebene zur Aufnahme von zwei Schubladen ermöglicht eine besonders effiziente Nutzung des Staufachs.

Die Aufgabe der Erfindung wird auch gelöst durch ein Staufachsystem für eine Bordküche eines Luftfahrzeugs mit mindestens einer der oben vorgestellten Staufachvorrichtungen und mit mindestens einem in der mindestens einen Staufachvorrichtung aufgenommenen Rollcontainer, wobei alle Führungs- und Haltevorrichtungen der Staufachvorrichtung in dem eingeklappten Zustand sind, oder mit einem oder mehreren in der mindestens einen Staufachvorrichtung aufgenommenen und durch die in den ausgeklappten Zustand versetzten Führungs- und Haltevorrichtungen gehaltenen Behältern, die insbesondere Ofeneinsätze, Standard Units und/oder Schubladen sind.

Die Erfindung umfasst beliebige Kombinationen der oben vorgestellten Weiterbildungen.

### Kurze Beschreibung der Zeichnungen

Zur Verdeutlichung der vorgeschlagenen Staufachvorrichtung werden nun Ausführungsbeispiele mit Verweis auf die folgenden Figuren vorgestellt.
- Fig. 1: veranschaulicht schematisch ein Ausführungsbeispiel der vorgestellten Staufachvorrichtung mit darin aufgenommenen und gehaltenen Ofeneinsätzen.
- Fig. 2: veranschaulicht schematisch ein Ausführungsbeispiel der vorgestellten Staufachvorrichtung mit einem darin aufgenommenen Rollcontainer.
- Fig. 3: ist eine perspektivische Ansicht eines Ausführungsbeispiels der vorgestellten Staufachvorrichtung, die zur Aufnahme von Behältern auf drei Einschubebenen konfiguriert ist.
- Fig. 4: ist eine perspektivische Ansicht der in Fig. 3 veranschaulichten Staufachvorrichtung mit sechs darin aufgenommenen Ofeneinsätzen.
- Fig. 5: ist eine perspektivische Ansicht des Ausführungsbeispiels der vorgestellten Staufachvorrichtung von Fig. 3 und Fig. 4 nach der Umrüstung zum Aufnehmen eines Rollcontainers.
- Fig. 6: ist eine perspektivische Ansicht der in Fig. 5 veranschaulichten Staufachvorrichtung mit einem darin aufgenommenen Rollcontainer.
- Fig. 7: ist eine perspektivische Detailansicht einer Führungs- und Haltevorrichtung eines Ausführungsbeispiels der vorgestellten Staufachvorrichtung in dem ausgeklappten Zustand.
- Fig. 8: ist eine perspektivische Detailansicht der Führungs- und Haltevorrichtung des bereits in Fig. 7 gezeigten Ausführungsbeispiels der vorgestellten Staufachvorrichtung in dem eingeklappten Zustand.
- Fig. 9: zeigt eine perspektivische Ansicht eines Ausführungsbeispiels der vorgestellten Staufachvorrichtung mit einem Staufach mit vier Einschubebenen, die mit sechs Ofeneinsätzen und zwei Schubläden belegt sind.
- Fig. 10: zeigt eine perspektivische Ansicht des Ausführungsbeispiels von Fig. 9, wobei vier Einschubebenen in dem Staufach mit vier Ofeneinsätzen und vier Schubläden belegt sind.

In den aufgeführten Figuren sind identische oder ähnliche Komponenten figuren-übergreifend mit denselben Bezugszeichen bezeichnet.

### Ausführungsbeispiele der Erfindung

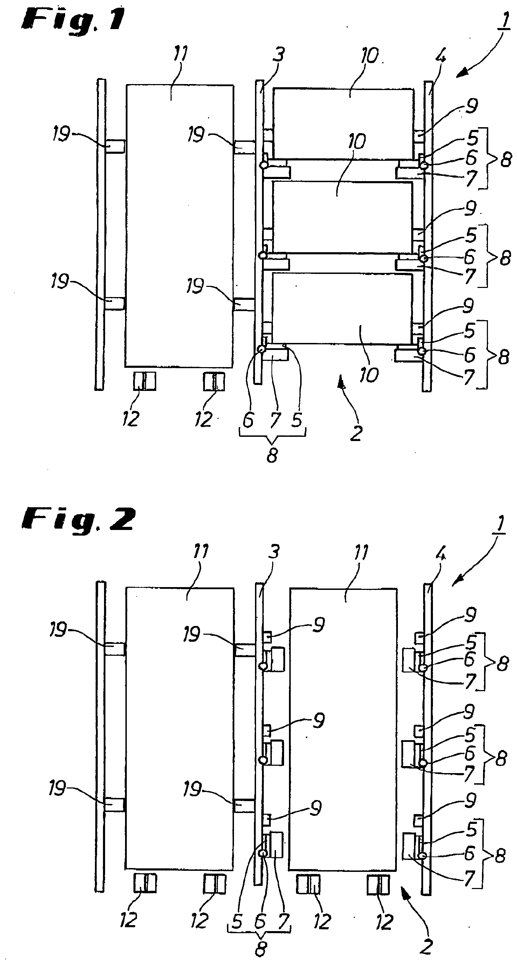

Fig. 1 und Fig. 2 veranschaulichen schematisch ein Ausführungsbeispiel der vorgestellten umrüstbaren Staufachvorrichtung. Die in Fig. 1 veranschaulichte Staufachvorrichtung 1 ist zur Aufnahme und zum Halten von mehreren Behältern in dem Staufach 2 der Staufachvorrichtung 1 konfiguriert. Die Behälter sind jeweils als ein Ofeneinsatz 10 gemäß einer gemeinsamen oben angeführten Standardnorm ausgestaltet. An den beiden Innenseitenwänden 3 und 4 des Staufachs 2 sind jeweils drei Führungs- und Haltevorrichtungen 8 angeordnet, die sich alle in dem ausgeklappten Zustand befinden. Jede Führungs- und Haltevorrichtung 8 umfasst jeweils ein Trageelement 5, ein Scharnier 6 und eine Gleitleiste 7. Je zwei Führungs- und Haltevorrichtungen 8, die auf einer gemeinsamen Einschubhöhe auf den zueinander gegenüberliegenden Innenseitenwänden 3 und 4 des Staufachs 2 paarweise angeordnet sind, definieren als Paar eine Einschubebene des Staufachs. Die in Fig. 1 veranschaulichte Staufachvorrichtung 1 hat demgemäß drei Einschubebenen zum Aufnehmen und Halten von jeweils maximal zwei Ofeneinsätzen 10. Die Ofeneinsätze 10 werden in dem Staufach 2 durch die in den Hohlraum des Staufachs 2 hervorstehenden Trageelemente 5 gehalten und gestützt bzw. sind auf diesen abgestellt. Die Gleitleisten 7 der Führungs- und Haltevorrichtung sind zum unteren Boden des Staufachs 2 gerichtet und dienen bevorzugt zum Abstützen ihres zugeordneten Trageelements 5 an der benachbarten Innenseitenwand 3 oder 4. An den Innenseitenwänden 3 und 4 sind ferner für jede Einschubebene jeweilige Führungs- und Gleitleisten 9 angeordnet, die entsprechend der Breite der Ofeneinsätze 10 dimensioniert sind.

Die in Fig. 2 veranschaulichte Staufachvorrichtung 1 zeigt die bereits in der Fig. 1 veranschaulichte Staufachvorrichtung 1 nach der Umrüstung zum Aufnehmen eines Rollcontainers. In dem Staufach 2 der Staufachvorrichtung ist ein Rollcontainer 11 aufgenommen, der auf seinen Rädern 12 auf dem unteren Boden des Staufachs 2 abgestellt ist. Alle Führungs- und Haltevorrichtungen 8 sind in ihrem eingeklappten Zustand. Die Trageelemente 5 liegen eng an ihrer Innenseitenwand 3 oder 4 an. Die Gleitleisten 7 sind zu Seitenwänden des Rollcontainers 11 gerichtet und sind demgemäß angeordnet zum Führen und Begrenzen der Bewegungen des Rollcontainers 11 in dem Staufach 2.

Benachbart zu der Innenseitenwand 3 des Staufachs 2 des erläuterten Ausführungsbeispiels ist ein nicht-umrüstbares Staufach mit einem darin aufgenommenen und durch Führungsleisten 19 geführten Rollcontainer 11 veranschaulicht, der baugleich zu dem in dem erfindungsgemäßen umrüstbaren Staufach 2 aufgenommenen Rollcontainer 11 von Fig. 2 ist.

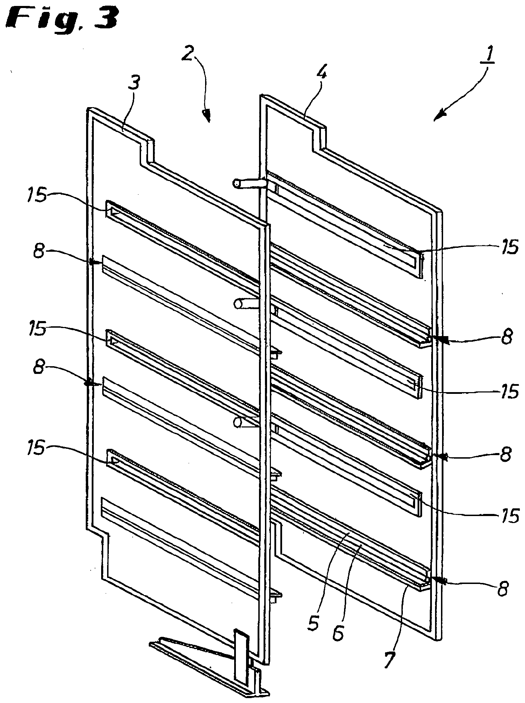

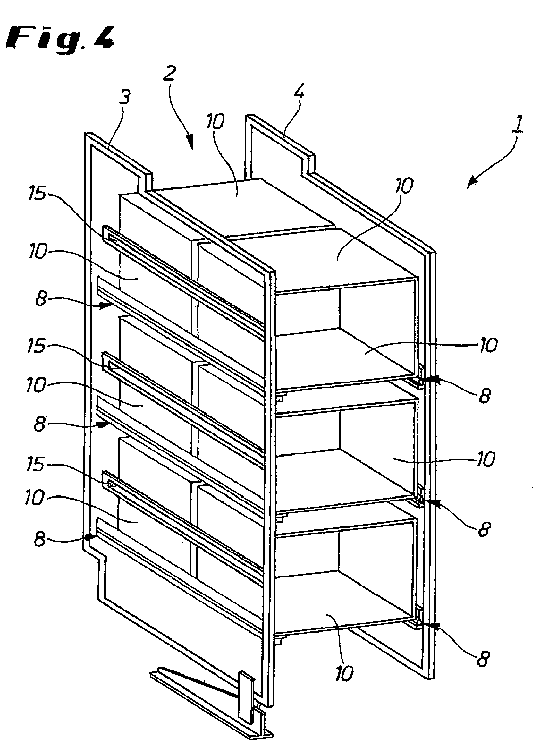

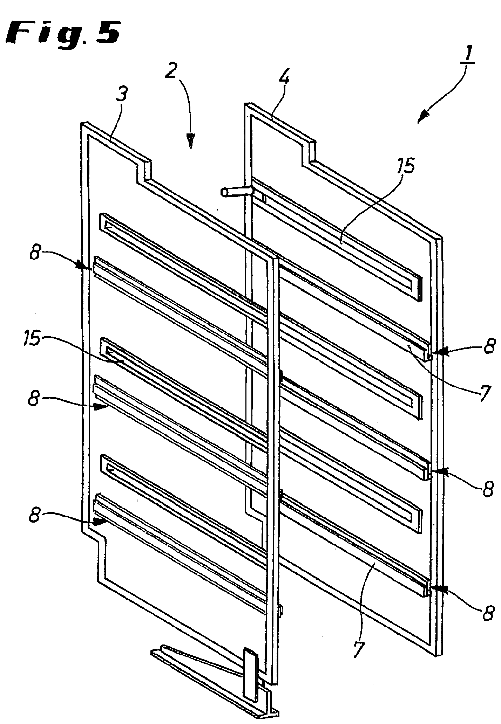

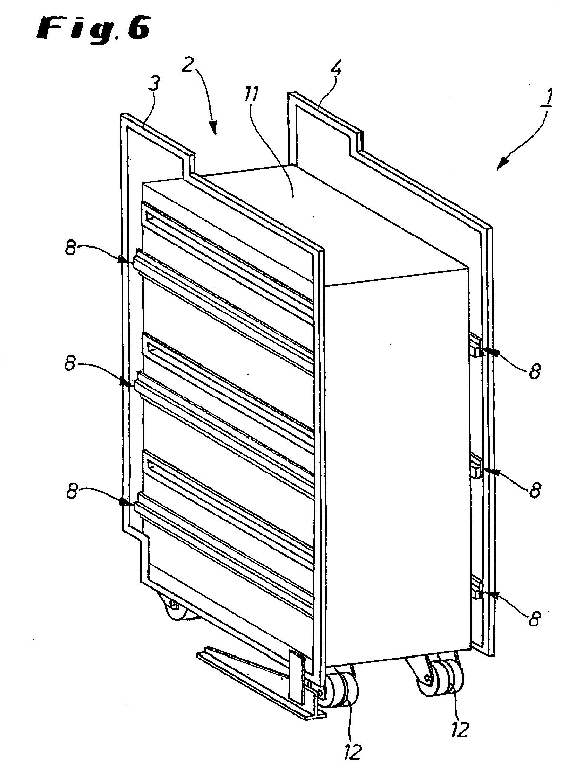

In Fig. 3 bis Fig. 6 ist jeweils ein selbes Ausführungsbeispiel der vorgestellten Staufachvorrichtung perspektivisch veranschaulicht. Fig. 3 und Fig. 4 dienen zur Veranschaulichung der zum Aufnehmen und Halten von Ofeneinsätzen konfigurierten Staufachvorrichtung 1. Alle Führungs- und Haltevorrichtungen 8 sind in dem ausgeklappten Zustand. Zusätzlich zu den bereits hinsichtlich des Ausführungsbeispiels von Fig. 1 und Fig. 2 erläuterten Komponenten ist die Staufachvorrichtung 1 von Fig. 3 bis Fig. 6 pro Einschubebene mit zwei Herausziehvorrichtungen 15 zum Herausziehen eines in dem Staufach 2 aufgenommenen hinteren Behälters versehen. Fig. 5 und Fig. 6 dienen zur Veranschaulichung der zum Aufnehmen eines Rollcontainers konfigurierten Staufachvorrichtung 1. Alle Führungs- und Haltevorrichtungen 8 sind in dem eingeklappten Zustand. Fig. 6 veranschaulicht die Begrenzung des Bewegungsspielraums des in dem Staufach 2 aufgenommenen Rollcontainers 2 durch die Gleitleisten der eingeklappten Führungs- und Haltevorrichtungen 8.

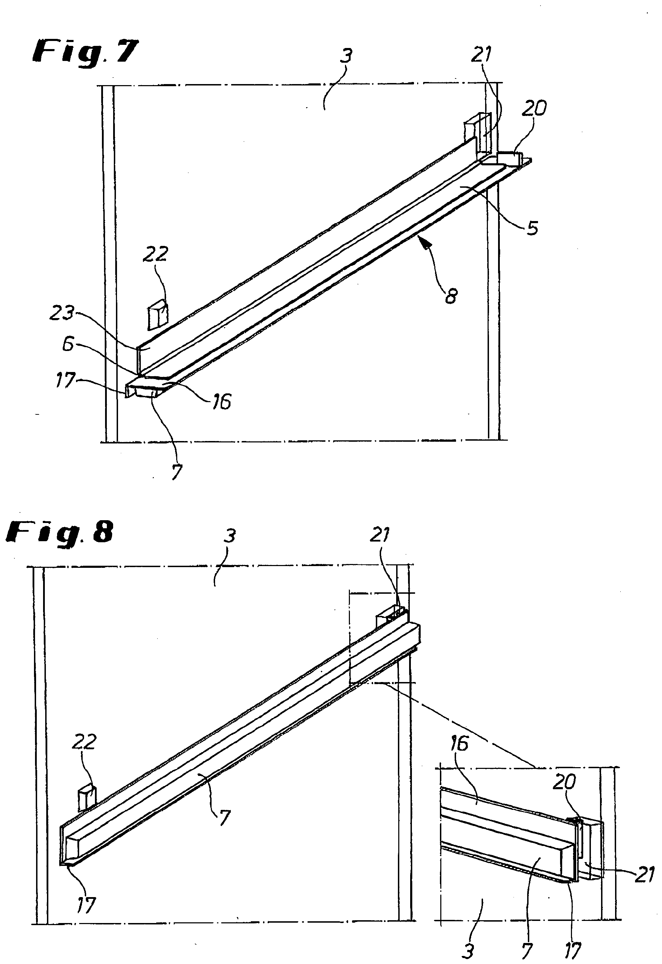

Fig. 7 und Fig. 8 zeigen perspektivische Detailansichten einer Führungs- und Haltevorrichtung 8 gemäß einem Ausführungsbeispiel in dem ausgeklappten bzw. dem eingeklappten Zustand. Die in Fig. 7 und Fig. 8 veranschaulichte Führungs- und Haltevorrichtung 8 umfasst ein Scharnier 6 mit einer horizontal in Einschubrichtung verlaufenden Drehachse mit einem ersten Flügel 23 und einem zweiten Flügel, der als Trageelement 5 zum Halten eines in dem Staufach aufgenommenen Behälters ausgebildet ist. Bei einem Übergang von dem eingeklappten in den ausgeklappten Zustand wird das Trageelement 5 mittels einer Drehbewegung abwärts geschwenkt. Bei einem Übergang von dem ausgeklappten in den eingeklappten Zustand wird das Trageelement 5 mittels einer Drehbewegung aufwärts geschwenkt bzw. hochgeklappt. Das Trageelement 5 ist im ausgeklappten Zustand auch als Führungsschiene zum Führen des Behälters beim Einbringen des Behälters in das Staufach ausgebildet. Der erste und der zweite Flügel sind als sich entlang der Einschubrichtung erstreckende Platten ausgebildet. Der erste Flügel ist an der Innenseitenwand 3 des Staufachs montiert. An dem das Trageelement 5 darstellenden zweiten Flügel ist eine rechtwinklig abgewinkelte Platte 16 mit einem als Abstützungselement 17 ausgebildeten Abschnitt fixiert. Das rechtwinklig zum Trageelement 5 ausgerichtete Abstützungselement 17 ist ausgebildet zum Abstützen des Trageelements 5 in dem ausgeklappten Zustand an der benachbarten Innenwand 3 des Staufachs. Auf einer von dem Trageelement 5 abgewandten Seite der abgewinkelten Platte 16 ist die Gleitleiste 7 angebracht, die sich wie die ersten und zweiten Flügel länglich in Richtung der Einschubrichtung erstreckt. Im Bereich des vorderen Endes der Führungs- und Haltevorrichtung 8 ist eine Arretierungsvorrichtung 22 zum Sichern eines Behälters gegen ein Herausfallen aus dem Staufach der Staufachvorrichtung vorgesehen. An einem hinteren Ende der Führungs- und Haltevorrichtung 8 ist diese mit einem integrierten Anschlag 20 versehen, der als Anschlagpuffer und zur Begrenzung der Einbringtiefe eines in das Staufach auf dem Trageelement 5 eingeschobenen Behälters ausgebildet ist. Die Innenseitenwand 3 ist in der Umgebung des hinteren Endes der Führungs- und Haltevorrichtung 8 mit einer Vertiefung bzw. Aussparung 21 versehen. In Fig. 8 ist diese Aussparung in vergrößerter Ansicht dargestellt. Die Aussparung 21 ist ausgebildet zum Aufnehmen des Anschlags 20 im eingeklappten Zustand der Führungs- und Haltevorrichtung 8, so dass der Anschlag 20 nicht in den Hohlraum des Staufachs hervorsteht und daher deaktiviert ist. In dem eingeklappten Zustand der Führungs- und Haltevorrichtung 8, der in Fig. 8 dargestellt ist, liegen der erste und der zweite Flügel so nah wie möglich aufeinander, und die Gleitleiste 7 ist in dem Staufach angeordnet zum Führen von Bewegungen eines Rollcontainers in dem Staufach.

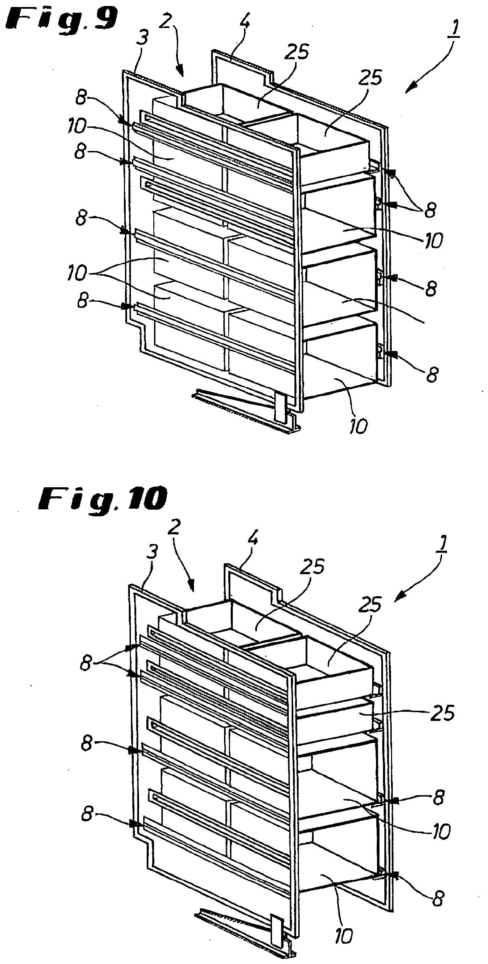

In Fig. 9 und Fig. 10 ist ein Ausführungsbeispiel einer vorgestellten Staufachvorrichtung perspektivisch veranschaulicht. Die Staufachvorrichtung ist mit acht Führungs- und Haltevorrichtungen 8 in vier unterschiedlichen Höhen des Staufachs 2 versehen. Bei der in Fig. 9 dargestellten Bestückung der Staufachvorrichtung werden sechs Ofeneinsätze 10 seitlich durch die zugeordneten unteren sechs Führungs- und Haltevorrichtungen 8 gehalten. Die oberen zwei Führungs- und Haltevorrichtungen 8 stützen hingegen zwei hintereinander angeordnete Schubläden 25. Bei der in Fig. 10 dargestellten Bestückung derselben Staufachvorrichtung wie in Fig. 9 kommt allen acht Führungs- und Haltevorrichtungen 8 eine stützende Funktion von vier Ofeneinsätzen 10 sowie vier Schubläden 25 ohne das in Fig. 9 dargestellte seitliche Halten der Ofeneinsätze 10 zu. Dadurch dass die Staufachvorrichtung von Fig. 9 und Fig. 10 alternativ zum seitlichen Halten oder zum Stützen der Ofeneinsätze 10 ausgebildet ist, kann das Staufach flexibel an den Nutzungsbedarf angepasst werden.

Die obigen Ausführungsbeispiele können auch zum wahlweisen Aufnehmen von Ofeneinsätzen oder Standard Units oder Schubladen ausgebildet sein. Da die Standards Units eine andere Einbringtiefe in das Staufach als die Ofeneinsätze haben, weist die jeweilige Staufachvorrichtung pro Einschubebene zusätzlich zu dem integrierten Anschlag, der an die Einbringtiefe der Ofeneinsätze / Standard Units angepasst ist, einen weiteren klappbaren Anschlag in dem Staufach auf, der an die Einbringtiefe der Standard Units / Ofeneinsätze angepasst ist. Im Fall einer Ausgestaltung zum wahlweisen Aufnehmen von Schubladen kann ein klappbarer Anschlag in dem Staufach vorgesehen sein, der an die Einbringtiefe der jeweiligen Schublade angepasst ist.

Alle veranschaulichten und erläuterten Ausführungsbeispiele der erfindungsgemäßen Staufachvorrichtung sind werkzeugfrei durch einen Benutzer von der Rollcontainer-Aufnahme-Konfiguration zu der Behälter-Aufnahme-Konfiguration und umgekehrt umrüstbar, ohne dass Komponenten zu der Staufachvorrichtung hinzugefügt oder von dieser entfernt werden müssen.

### Bezugszeichenliste

- 1: Staufachvorrichtung
- 2: Staufach
- 3,4: Innenseitenwand
- 5: Trageelement
- 6: Scharnier
- 7: Gleitleiste
- 8: Führungs- und Haltevorrichtung
- 9: Führungs- und Gleitleisten
- 10: Ofeneinsatz
- 11: Rollcontainer
- 12: Räder
- 15: Herausziehvorrichtung
- 16: Platte
- 17: Abstützungselement
- 19: Führungsleiste
- 20: integrierter Anschlag
- 21: Aussparung
- 22: Arretierungsvorrichtung
- 23: Flügel
- 25: Schublade

## Patentansprüche

1. Staufachvorrichtung (1) für eine Bordküche eines Luftfahrzeugs, mit einem Staufach (2) zur Aufnahme mindestens eines Rollcontainers (11) oder mindestens eines Behälters (10, 25), **dadurch gekennzeichnet, dass** in dem Staufach (2) klappbare Führungs- und Haltevorrichtungen (8) bereitgestellt sind, die nur in einem ausgeklappten Zustand zum Halten des mindestens einen Behälters (10, 25) in dem Staufach (2) ausgebildet sind und nur in einem eingeklappten Zustand eine Aufnahme des mindestens einen Rollcontainers (11) in dem Staufach (2) zulassen.

2. Staufachvorrichtung (1) nach Anspruch 1, **dadurch gekennzeichnet, dass** die Führungs- und Haltevorrichtungen (8) in dem eingeklappten Zustand jeweils eine Gleitleiste (7) zum Führen des mindestens einen Rollcontainers (11) in dem Staufach (2) bereitstellen.

3. Staufachvorrichtung (1) nach Anspruch 1 oder 2, **dadurch gekennzeichnet, dass** die Führungs- und Haltevorrichtungen (8) jeweils ein Trageelement (5) und bevorzugt ein Abstützungselement (17) aufweisen, wobei in dem ausgeklappten Zustand der jeweiligen Führungs- und Haltevorrichtung (8) das jeweilige Trageelement (5) zum Halten eines Behälters (10, 25) und das Abstützungselement (17) zum Abstützen des Trageelements (5) in dem ausgeklappten Zustand an einer Innenwand (3, 4) des Staufachs (2) ausgebildet sind.

4. Staufachvorrichtung (1) nach einem der Ansprüche 1 bis 3, **dadurch gekennzeichnet, dass** die Führungs- und Haltevorrichtungen (8) jeweils ein Scharnier (6) mit einem an einer Innenseitenwand (3, 4) des Staufachs (2) fixierten ersten Flügel (23) und einem relativ zu dem ersten Flügel (23) um eine Scharnierachse drehbaren zweiten Flügel (5) aufweisen, wobei der zweite Flügel (5) in dem ausgeklappten Zustand der jeweiligen Führungs- und Haltevorrichtung (8) zum Halten des mindestens einen Behälters (10, 25) und in dem eingeklappten Zustand als eine Gleitleiste (7) zum Führen des mindestens einen Rollcontainers (11) ausgebildet ist.

5. Staufachvorrichtung (1) nach einem der Ansprüche 1 bis 4, **dadurch gekennzeichnet, dass** mindestens eine der klappbaren Führungs- und Haltevorrichtungen (8) mit einem integrierten Anschlag (20) für den mindestens einen Behälter (10, 25) versehen ist.

6. Staufachvorrichtung (1) nach einem der Ansprüche 1 bis 5, **dadurch gekennzeichnet, dass** in dem Staufach (2) für mindestens eine Einschubebene der klappbaren Führungs- und Haltevorrichtungen (8) zwei oder mehr bevorzugt klappbare Anschläge mit zueinander unterschiedlichen behälterspezifischen Einbringtiefen angeordnet sind.

7. Staufachvorrichtung (1) nach einem der Ansprüche 1 bis 6, **dadurch gekennzeichnet, dass** die Staufachvorrichtung (1) zum Aufnehmen und Halten hintereinander angeordneter Behälter (10, 25) ausgebildet ist und ferner mindestens eine Herausziehvorrichtung (15) zum Herausziehen eines in dem Staufach (2) aufgenommenen hinteren Behälters (10, 25) umfasst.

8. Staufachvorrichtung (1) nach einem der Ansprüche 1 bis 7, **dadurch gekennzeichnet, dass** das Staufach (2) durch einen Benutzer von der Rollcontainer-Aufnahme zu der Behälter-Aufnahme und umgekehrt, insbesondere ohne Komponenten-Hinzufügung oder Komponenten-Entfernung, werkzeugfrei umrüstbar ist.

9. Staufachvorrichtung (1) nach einem der Ansprüche 1 bis 8, **dadurch gekennzeichnet, dass** die Staufachvorrichtung (1) eine Einrichtung aufweist zum automatischen Versetzen der Führungs- und Haltevorrichtungen (8) in den eingeklappten Zustand nach einer Entnahme eines von ihnen gehaltenen Behälters (10, 25) aus dem Staufach (2).

10. Staufachvorrichtung (1) nach einem der Ansprüche 1 bis 9, **dadurch gekennzeichnet, dass** die Staufachvorrichtung (1) eine Einrichtung zum automatischen Versetzen der Führungs- und Haltevorrichtungen (8) in den ausgeklappten Zustand aufweist.

11. Staufachvorrichtung (1) nach einem der Ansprüche 1 bis 10, **dadurch gekennzeichnet, dass** die Führungs- und Haltevorrichtungen (8) im normalen Betrieb rein mechanisch umklappbar sind.

12. Staufachvorrichtung (1) nach einem der Ansprüche 1 bis 11, **dadurch gekennzeichnet, dass** das Staufach (2) zur Aufnahme von, bevorzugt genau, einem Fullsize-Trolley oder von, bevorzugt höchstens zwei, Halfsize-Trolleys für eine Bordküche eines Luftfahrzeugs ausgebildet ist, wenn alle Führungs- und Haltevorrichtungen (8) in dem eingeklappten Zustand sind.

13. Staufachvorrichtung (1) nach einem der Ansprüche 1 bis 12, **dadurch gekennzeichnet, dass** der mindestens eine Behälter (10, 25) für eine Bordküche eines Luftfahrzeugs vorgesehen ist, und insbesondere vom Typ eines Ofeneinsatzes, einer Standard Unit und/oder einer Schublade ist.

14. Staufachvorrichtung (1) nach einem der Ansprüche 1 bis 13, **dadurch gekennzeichnet, dass** die Führungs- und Haltevorrichtungen (8) in dem Staufach (2) zum Aufnehmen und Halten einer Mehrzahl von Behältern eines ersten Typs (10, 25), insbesondere von Ofeneinsätzen, und einer Mehrzahl von Behältern eines zum ersten Typ unterschiedlichen, zweiten Typs (25, 10), insbesondere von Schubläden, angeordnet sind.

15. Staufachsystem für eine Bordküche eines Luftfahrzeugs, mit mindestens einer Staufachvorrichtung (1) gemäß einem der Ansprüche 1 bis 14 und mit mindestens einem in der mindestens einen Staufachvorrichtung (1) aufgenommenen Rollcontainer (11), wobei alle Führungs- und Haltevorrichtungen (8) der Staufachvorrichtung (1) in dem eingeklappten Zustand sind, oder mit einem oder mehreren in der mindestens einen Staufachvorrichtung (1) aufgenommenen und durch die in den ausgeklappten Zustand versetzten Führungs- und Haltevorrichtungen (8) gehaltenen Behältern (10, 25), die insbesondere Ofeneinsätze, Standard Units und/oder Schubladen sind.

## Claims

1. A storage compartment device (1) for a galley of an aircraft with a storage compartment (2) for receiving at least one rolling container (11) or at least one container (10, 25), **characterized in that** foldable guiding and holding devices (8) are provided in the storage compartment (2) and designed for only holding the at least one container (10, 25) in the storage compartment (2) in a folded-out state and for only allowing the at least one rolling container (11) to be received in the storage compartment (2) in a folded-in state.

2. The storage compartment device (1) according to claim 1, **characterized in that** the guiding and holding devices (8) respectively provide a slide rail (7) for guiding the at least one rolling container (11) in the storage compartment (2) in the folded-in state.

3. The storage compartment device (1) according to claim 1 or 2, **characterized in that** the guiding and holding devices (8) respectively have a carrying element (5) and preferably a supporting element (17), wherein the respective carrying element (5) is designed for holding the container (10, 25) in the folded-out state of the respective guiding and holding device (8) and the supporting element (17) is designed for supporting the carrying element (5) on an inner wall (3, 4) of the storage compartment (2) in the folded-out state.

4. The storage compartment device (1) according to one of claims 1 to 3, **characterized in that** the guiding and holding devices (8) respectively have a hinge (6) with a first wing (23) that is fixed on an inner side wall (3, 4) of the storage compartment (2) and a second wing (5) that is rotatable relative to the first wing (23) about a hinge axis, wherein the second wing (5) is designed for holding the at least one container (10, 25) in the folded-out state of the respective guiding and holding device (8) and in the form of a slide rail (7) for guiding the at least one rolling container (11) in the folded-in state.

5. The storage compartment device (1) according to one of claims 1 to 4, **characterized in that** at least one of the foldable guiding and holding devices (8) is provided with an integrated stop (20) for the at least one container (10, 25).

6. The storage compartment device (1) according to one of claims 1 to 5, **characterized in that** two or more preferably foldable stops with different container-specific insertion depths are arranged in the storage compartment (2) for at least one insertion plane of the foldable guiding and holding devices (8).

7. The storage compartment device (1) according to one of claims 1 to 6, **characterized in that** the storage compartment device (1) is designed for receiving and holding containers (10, 25) that are arranged behind one another and furthermore comprises at least one pull-out device (15) for pulling out a rear container (10, 25) received in the storage compartment (2).

8. The storage compartment device (1) according to one of claims 1 to 7, **characterized in that** the storage compartment (2) can be converted from a rolling container receptacle to a container receptacle and vise versa by a user without tools, particularly without adding components or removing components.

9. The storage compartment device (1) according to one of claims 1 to 8, **characterized in that** the storage compartment device (1) has a mechanism for automatically transferring the guiding and holding devices (8) into the folded-in state after the removal of a container (10, 25) held by said guiding and holding devices from the storage compartment (2).

10. The storage compartment device (1) according to one of claims 1 to 9, **characterized in that** the storage compartment device (1) has a mechanism for automatically transferring the guiding and holding devices (8) into the folded-out state.

11. The storage compartment device (1) according to one of claims 1 to 10, **characterized in that** the guiding and holding devices (8) are foldable in a purely mechanical manner during normal operation.

12. The storage compartment device (1) according to one of claims 1 to 11, **characterized in that** the storage compartment (2) is designed for receiving preferably just one full-size trolley or preferably no more than two half-size trolleys for a galley of an aircraft when all guiding and holding devices (8) are in the folded-in state.

13. The storage compartment device (1) according to one of claims 1 to 12, **characterized in that** the at least one container (10, 25) is intended for a galley of an aircraft and particularly realized in the form of an oven insert, a standard unit and/or a drawer.

14. The storage compartment device (1) according to one of claims 1 to 13, **characterized in that** the guiding and holding devices (8) in the storage compartment (2) are arranged for receiving and holding a plurality of containers of a first type (10, 25), particularly oven inserts, and a plurality of containers of a second type (25, 10) that differs from the first type, particularly drawers.

15. A storage compartment system for a galley of an aircraft with at least one storage compartment device (1) according to one of claims 1 to 14 and with at least one rolling container (11), which is received in the at least one storage compartment device (1), wherein all guiding and holding devices (8) of the storage compartment device (1) are in the folded-in state, or with one or more containers (10, 25), particularly oven inserts, standard unit and/or drawers, which are received in the at least one storage compartment device (1) and held by the guiding and holding devices (8) that are transferred into the folded-out state.

## Revendications

1. Système de compartiments de rangement (1) pour cuisine de bord d'un véhicule aéronautique, comportant un compartiment de rangement (2) destiné à recevoir au moins un conteneur roulant (11) ou au moins un récipient (10, 25), **caractérisé en ce que** sont mis à disposition des dispositifs de guidage et de retenue (8) rabattables dans le compartiment de rangement (2) qui, seulement dans un état déployé, sont conçus pour au moins un récipient (10, 25) dans le compartiment de rangement (2) et permettent de de recevoir au moins un conteneur roulant (11) dans le compartiment de rangement (2) seulement dans un état rabattu.

2. Système de compartiments de rangement (1) selon la revendication 1, **caractérisé en ce que** les dispositifs de guidage et de retenue (8), dans l'état rabattu, mettent à disposition respectivement une baguette coulissante (7) pour le guidage de l'au moins un conteneur roulant (11) dans le compartiment de rangement (2).

3. Système de compartiments de rangement (1) selon la revendication 1 ou 2, **caractérisé en ce que** les dispositifs de guidage et de retenue (8) présentent respectivement un élément porteur (5) et de préférence un élément de soutien (17), l'élément porteur respectif (5) étant, dans l'état déployé du dispositif de guidage et de retenue respectif (8), conçu pour retenir un récipient (10, 25) et l'élément de soutien (17) pour soutenir l'élément porteur (5) dans l'état déployé au niveau d'une paroi intérieure (3, 4) du compartiment de rangement (2).

4. Système de compartiments de rangement (1) selon une des revendications 1 à 3, **caractérisé en ce que** les dispositifs de guidage et de retenue (8) présentent respectivement une charnière (6) avec une première aile (23) fixée à une paroi latérale intérieure (3, 4) du compartiment de retenue (2) et une seconde aile (5) pouvant tourner par rapport à la première aile (23) autour d'un axe de charnière, la seconde aile (5), dans l'état déployé du dispositif de guidage et de retenue respectif (8), étant conçue pour retenir l'au moins un récipient (10, 25) et, dans l'état rabattu, sous forme d'une baguette coulissante (7), pour guider l'au moins un conteneur roulant (11).

5. Système de compartiments de rangement (1) selon une des revendications 1 à 4, **caractérisé en ce qu'**au moins un des dispositifs de guidage et de retenue rabattable (8) est pourvu d'une butée intégrée (20) pour l'au moins un récipient (10, 25).

6. Système de compartiments de rangement (1) selon une des revendications 1 à 5, **caractérisé en ce que**, dans le compartiment de rangement (2) pour au moins un plan d'insertion des dispositifs de guidage et de retenue rabattables (8), deux butées de préférence rabattables ou plus ayant des profondeurs d'introduction spécifiques aux récipient différentes les unes des autres sont disposées.

7. Système de compartiments de rangement (1) selon une des revendications 1 à 6, **caractérisé en ce que** le système de compartiments de rangement (1) est conçu pour recevoir et retenir des récipients disposés les uns derrière les autres (10, 25) et comprend en outre au moins un dispositif d'extraction (15) pour extraire un récipient arrière (10, 25) reçu dans le compartiment de rangement (2).

8. Système de compartiments de rangement (1) selon une des revendications 1 à 7, **caractérisé en ce que** le compartiment de rangement (2) est transformable sans outil par un utilisateur pour passer d'un support de conteneur roulant à un support de récipient et inversement, en particulier sans ajouter de composants ou sans enlever de composants.

9. Système de compartiments de rangement (1) selon une des revendications 1 à 8, **caractérisé en ce que** le système de compartiments de rangement (1) présente un dispositif de passage automatique des dispositifs de guidage et de retenue (8) en état rabattu après le prélèvement d'un des récipients qu'il retient (10, 25) dans le compartiment de rangement (2).

10. Système de compartiments de rangement (1) selon une des revendications 1 à 9, **caractérisé en ce que** le système de compartiments de rangement (1) présente un dispositif de passage automatique des dispositifs de guidage et de retenue (8) en état déployé.

11. Système de compartiments de rangement (1) selon une des revendications 1 à 10, **caractérisé en ce que** les dispositifs de guidage et de retenue (8), en fonctionnement normal, sont permutables de manière purement mécanique.

12. Système de compartiments de rangement (1) selon une des revendications 1 à 11, **caractérisé en ce que** le compartiment de rangement (2) est conçu pour recevoir, de préférence précisément, un chariot de taille normale ou, de préférence au plus deux chariots de demi-taille, pour une cuisine de bord d'un véhicule aéronautique lorsque tous les dispositifs de guidage et de retenue (8) sont en état rabattu.

13. Système de compartiments de rangement (1) selon une des revendications 1 à 12, **caractérisé en ce que** l'au moins un récipient (10, 25) est prévu pour une cuisine de bord d'un véhicule aéronautique, et en particulier du type d'un insert de four, d'une unité standard et/ou d'un tiroir.

14. Système de compartiments de rangement (1) selon une des revendications 1 à 13, **caractérisé en ce que** les dispositifs de guidage et de retenue (8) sont disposés dans le compartiment de rangement (2) pour recevoir et retenir une pluralité de récipients d'un premier type (10, 25), en particulier des inserts de four, et une pluralité de récipients d'un second type (25, 10) différent du premier type, en particulier des tiroirs.

15. Système de rangement pour cuisine de bord d'un véhicule aéronautique, comportant au moins un système de compartiments de rangement (1) selon une des revendications 1 à 14 et au moins un conteneur roulant (11) reçu dans l'au moins un système de compartiments de rangement (1), tous les dispositifs de guidage et de retenue (8) du système de compartiments de rangement (1) étant en état rabattu, ou un ou plusieurs récipients (10, 25) reçus dans l'au moins un système de compartiments de rangement (1) et retenus par les dispositifs de guidage et de retenue (8) passés en état déployé et qui sont en particulier des inserts de four, des unités standard et/ou des tiroirs.
